Europäisches Patentamt

European Patent Office

Office européen des brevets

(11) Publication number: **0 031 978**
**B1**

(12) **EUROPEAN PATENT SPECIFICATION**

(45) Date of publication of patent specification: **04.07.84**

(21) Application number: **80201211.2**

(22) Date of filing: **18.12.80**

(51) Int. Cl.³: **B 29 F 1/10, B 29 D 23/02, F 16 L 47/06, B 29 C 17/00**

(54) **Method for installing a sealing body in a groove of a socket and pipe part of plastics material.**

(30) Priority: **21.12.79 NL 7909293**

(43) Date of publication of application:
**15.07.81 Bulletin 81/28**

(45) Publication of the grant of the patent:
**04.07.84 Bulletin 84/27**

(84) Designated Contracting States:
**AT BE CH DE FR GB IT LI LU NL SE**

(56) References cited:
**FR - A - 1 578 138**
**FR - A - 2 347 172**
**FR - A - 2 393 664**
**FR - A - 2 439 077**
**GB - A - 958 367**
**GB - A - 1 236 907**
**GB - A - 1 477 074**
**GB - A - 1 546 769**
**NL - A - 7 809 777**
**US - A - 1 918 417**
**US - A - 3 287 949**
**US - A - 3 920 268**

(73) Proprietor: **WAVIN B.V.**
**Händellaan 251**
**NL-8031 EM Zwolle (NL)**

(72) Inventor: **de Putter, Warner Jan**
**11 Jan van Arkelstraat**
**NL-7772 AN Hardenberg (NL)**

(74) Representative: **van der Veken, Johannes Adriaan et al,**
**EXTERPATENT Willem Witsenplein 4**
**NL-2596 BK 's-Gravenhage (NL)**

Courier Press, Leamington Spa, England.

## Description

The invention relates to a method of installing an annular sealing body, comprising a head part integral with a sleeve of resilient material, in an annular groove in a socket of a pipe part made of plastics, particularly thermoplastics material, wherein a closed space is formed inside the socket which space embraces the groove whereupon said space is filled with a flowable plastics elastomeric composition and the walls of a core consisting of an outer and inner part bounding the closed space are removed after setting of the composition. Such a method is known from FR—A— 2 347 172.

However, according to this method the sleeve of the sealing body should be deformable to an internal diameter at least equal to the predetermined inner diameter of the socket in order to permit passage of the core as used for moulding the sealing body.

This means that a well deformable material should also be used for the head part of sealing body which is not always allowed for manufacturing a connection of the socket with a spigot end.

It is now the aim of the invention to provide a method wherein the material for the sealing body has not to meet the aforementioned requirement and any material suitable for a sealing body can be used.

This aim is attained in that said space is filled through the perforated wall of said groove and the inner core part is then deformed inwardly whereafter the two core parts are axially removed whereby any deformation of the moulded sealing body is avoided.

Due to these measures, the plastics elastomeric composition in the closed space may also be intimately bonded with a plastics material from which the groove is formed, so that the sealing body is on the one hand retained in a very reliable manner, excluding a dislodgement during transport or during the insertion of a male pipe part, whilst, on the other hand, an intimate bonding between the plastics material preferably the thermoplastics synthetic material of the pipe and the portion of a sealing body of thermoplastics elastomer being accommodated within the groove, excludes any risks of leakages.

It is however, not essential that the plastics elastomer, preferably a thermoplastics elastomer, is intimately bonded with the thermoplastics synthetic material, as in the case of a groove comprising walls tapering towards each other in the direction of the axis of the pipe part, this construction may also retain the sealing body.

The closed space is appropriately filled by providing the wall of the groove with a bore or perforation through a metal pipe so that the groove chamber can be filled with the flowable liquid plastics elastomeric composition, particularly a thermoplastics elastomer from the outside. Preferably the material of the groove is maintained in a thermoplastic condition for that purpose, so that an injection channel may be formed in the wall of the groove chamber.

When moulding the groove, an opening can previously be applied in the groove wall, so that said groove can be provided with the plastics elastomeric composition particularly a thermoplastics elastomer, for moulding the desired sealing body from the outside.

Preferably a closed inner part of the core remains connected with the outer part of the core through a closed connecting wall at the moment of retracting inner part of the core axis of the socket. This greatly facilitates a correct shaping of the sealing body.

During the removal of the walls bounding the closed space, the sealing body is not deformed.

The invention also relates to a socket pipe of plastics, particularly thermoplastics material, comprising a socket with an annular groove and a head part integral with a sleeve of resilient material of annular sealing body is accommodated in the groove, the sealing body of a plastics elastomer being fixed with respect to the inner wall of the groove, characterized in that the wall of the groove is provided with at least one aperture extending from the interior of the groove to the exterior.

The present invention will be illustrated with respect to an embodiment in the drawing, wherein

Figure 1, shows a pipe part of thermoplastics material with a socket comprising a core;

Figure 2, shows the same pipe part during moulding of the sealing body;

Figure 3, shows part of a pipe with a groove and an aperture applied therein, and

Figures 4a and 4b show the moulding of part of a socket with a groove.

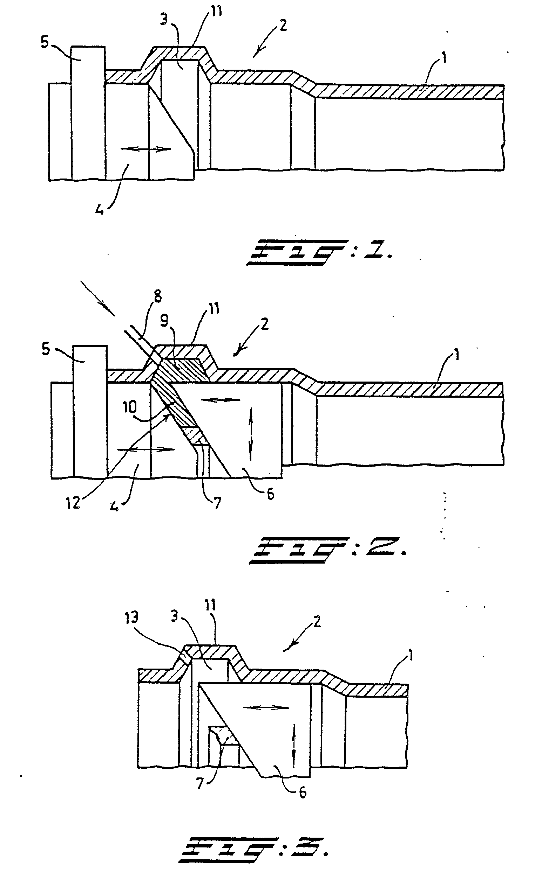

Fig. 1 shows a plastics pipe part 1 of thermoplastics material. This material may for instance be polyvinylchloride, polyethylene or polypropylene, but obviously the scope of the present invention is not limited to said plastics.

The plastics pipe part 1 is provided with a socket 2, comprising an annular bead 11, by means of which the annular groove chamber 3 is shaped.

Socket part 2 is e.g. moulded by injection moulding while applying an inner core 4, with an elevation 5 adapted to the annular groove chamber 3.

Obviously, said groove chamber 3 may be shaped in many manners, as generally known in the art. A very special method for shaping said groove chamber will be described later on.

The core 4 comprises a connecting wall part 7, which is connected with an inflatable core part 6. After having moved said core part 6 towards the inside of the socket, and after having inflated the same, its final condition will cause said core part 6 to adjoin the inside of the socket 2 beside the groove chamber 3.

By means of a metal pipe 8 a channel is made in the wall of the groove chamber 3, whereupon flowable thermoplastics elastomer can be injected into the formed space 12, through said channel.

Because of the good uniting properties of thermoplastics elastomer and thermoplastics pipe material, a very intimate bonding between the head part 9 of the sealing body, consisting of thermoplastics elastomer and the inner wall of the annular groove chamber 3 is accomplished.

The connecting wall 7 bounds the dimensions of the sleeve-shaped part or lip-shaped part 10 of the sealing body of thermoplastics elastomer.

After having filled space 12 with thermoplastics elastomer and after having cured said thermoplastics elastomer mass, core part 6 is withdrawn so that its outer diameter is not greater than the outer diameter of wall part 7. Subsequently core part 6 with connecting wall part 7, is drawn into core 4, so that core 4 can be removed from the socket without any deformation of the sleeve-shaped or lip-shaped part 10 of the sealing body of thermoplastics elastomer.

In order to perforate the wall of the annular groove chamber 3 by means of the metal pipe 8, it is recommended to maintain the plastics material in a plasticized condition.

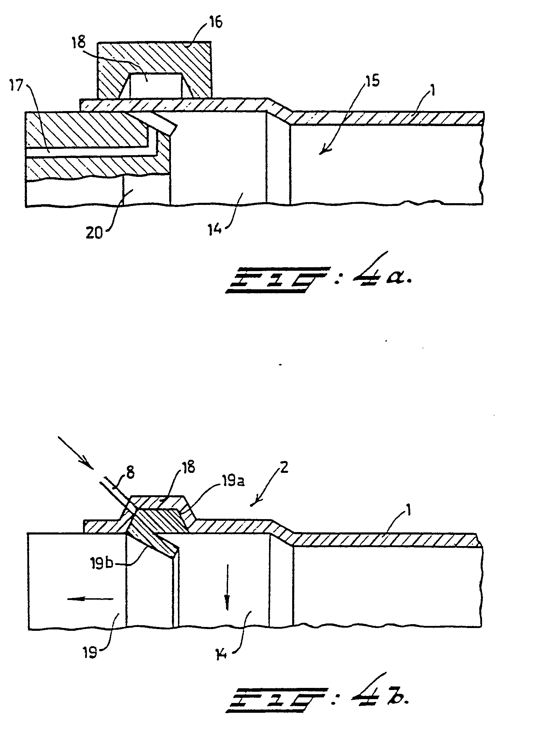

Figure 3 shows, however, that the wall of the groove chamber may be provided with a bore 13 during shaping of the annular groove chamber 3. In a manner, corresponding to that as shown in Fig. 2, the desired sealing body is then obtained, said sealing body comprising a head 9, and a sealing sleeve or sealing lip 10, which head 9 is intimately bonded with the inner wall of the groove chamber 3.

Fig. 4a shows a heated socket end into which a core 15 is disposed, the core part 14 of which is radially displaceable.

The socket end is surrounded by a mould part 16, whereupon pressured air, introduced through channel 17, forms groove 18 in the socket end. After having replaced core part 20 by another core part 19, or after having sealed off the channel 17, the moulding cavities 19a and 19b are filled by injection, with a thermoplastics rubber. After curing, core part 19 is drawn towards the outside whilst core part 14 is drawn towards the inside. The advantage of this method is that a simple mould can be used.

## Claims

1. Method of installing an annular sealing body (10), comprising a head part (9) integral with a sleeve (10) of resilient material in an annular groove (3) in a socket (2) of a pipe part made of plastics, particularly thermoplastics material, wherein a closed space (12) is formed inside the socket (2) which space embraces the groove (3) whereupon said space (12) is filled with a flowable plastics elastomeric composition and the walls (6, 7) of a core (4, 6) consisting of an outer and inner part bounding the closed space are removed after setting of the composition, characterized in that said space (12) is filled through the perforated wall of said groove (3) and the inner core part (6) is then deformed inwardly whereafter the two core parts (4, 6) are axially removed whereby any deformation of the moulded sealing body is avoided.

2. Method according to claim 1, characterized in that the wall of the groove (3) is provided with a bore or a perforation (13) through a metal pipe (8).

3. Method according to claim 1 or 2, characterized in that the material of the wall of the groove (3) to be perforated is maintained in a plasticised condition.

4. Method according to claim 1 to 3, characterized in that the outer side of the socket (2) is provided with a mould part (16) comprising a recess, whereupon a groove (18) is formed by means of an internal pressurized fluid, subsequently a closed space (12) is formed inside the socket, said space embracing the groove (3) and is filled with the flowable plastics elastomeric composition.

5. Method according to claims 1—4, characterized in that closed inner part (6) of the core remains connected with the outer part (4) of the core through a closed connecting wall (7) at the moment of retracting inner part (6) of the core radially to the axis of the socket (2).

6. A socket pipe made of plastics, particularly thermoplastics material, comprising a socket (2) with an annular groove (3) and a head part (9) integral with a sleeve of resilient material (10) of an annular sealing body is accommodated in groove (3), the sealing body (10) of a plastics elastomer being fixed with respect to the inner wall of the groove (3), characterized in that the wall of the groove (3) is provided with at least one aperture (13) extending from the interior of the groove (3) to the exterior.

## Revendications

1. Procédé d'installation d'un corps d'étanchéité annulaire (10), comprenant une partie tête (9) solidaire d'un manchon (10) en matière élastique dans une rainure annulaire (3) dans une partie femelle (2) d'un élément de tuyau en matière plastique, notamment en matière thermoplastique, procédé qui consiste à réaliser un espace fermé (12) à l'intérieur de l'élément femelle (2), cet espace comprenant la rainure (3), à remplir le dit espace (12) d'une composition élastomérique de matière plastique apte à s'écouler et à retirer les parois (6, 7) d'un noyau (4, 6) constitué d'une partie extérieure et d'une partie intérieure délimitant l'espace fermé, après durcissement de la composition, caractérisé en ce que le dit espace (12) est rempli à travers la paroi perforée de la dite rainure (3) et la partie intérieure (6) du noyau est ensuite déformée vers l'intérieur, après quoi les deux parties (4, 6) du noyau sont retirées axialement, tout en évitant toute déformation du corps d'étanchéité moulé.

2. Procédé selon la revendication 1, caractérisé en ce que la paroi de la rainure (3) est percée d'un trou ou d'une perforation (13) à l'aide d'un tube métallique (8).

3. Procédé selon la revendication 1 ou 2, caractérisé en ce que le matériau constitutif de la paroi de la rainure (3) devant être perforée est maintenu à l'état plastique.

4. Procédé selon les revendications 1 à 3, caractérisé en ce que le côté extérieur de l'élément femelle (2) est pourvu d'une partie de moule (16) comprenant un évidement, une rainure (18) étant réalisée à l'aide d'un fluide sous pression interne et un espace fermé (12) étant ultérieurement réalisé à l'intérieur de l'élément femelle, le dit espace embrassant la rainure (3) et étant rempli de la composition élastomérique de matière plastique apte à s'écouler.

5. Procédé selon les revendications 1 à 4, caractérisé en ce que la partie intérieure fermée (6) du noyau reste liée à la partie extérieure (4) du noyau par une paroi de liaison fermée (7) au moment du retrait de la partie intérieure (6) du noyau radialement selon l'axe de l'élément femelle (2).

6. Elément de tuyau à partie femelle en matière plastique, notamment en matière thermoplastique, comprenant une partie femelle (2) dotée d'une rainure annulaire (3) et une partie tête (9) solidaire d'un manchon en matière élastique (10) d'un corps annulaire d'étanchéité est logée dans une rainure (3), le corps d'étanchéité (10) en élastomère plastique étant fixe par rapport à la paroi intérieure de la rainure (3), caractérisé en ce que la paroi de la rainure (3) comprend au moins une ouverture (13) s'étendant de l'intérieur de la rainure (3) vers l'extérieur.

**Patentansprüche**

1. Verfahren zum Einbringen eines ringförmigen Dichtungselements (10) mit einem mit einer Manschette (10) aus elastischem Material aus einem Stück bestehenden Kopfteil (9) in eine Ringnut (3) einer Muffe (2) eines Rohrteils aus Kunststoff, insbesondere thermoplastischem Material, wobei ein geschlossener Raum (12) im Inneren der Muffe (2) gebildet wird, der die Nut (3) umschließt, woraufhin der Raum (12) mit einer fließfähigen elastomeren Kunststoffzusammensetzung gefüllt wird und die Wände (6, 7) eines Kerns (4, 6) mit einem Außen- und einem Innenteil, die den geschlossenen Raum umgrenzen, nach einem Erstarren der Zusammensetzung entfernt werden, dadurch gekennzeichnet, daß der Raum (12) durch die gelochte Wand der Nut (3) hindurch gefüllt und der innere Kernteil (6) dann einwärts verformt wird, woraufhin die beiden Kernteile (4, 6) in axialer Richtung entfernt werden, wodurch jede Verformung des geformten Dichtungselements vermieden wird.

2. Verfahren nach Anspruch 1, dadurch gekennzeichnet, daß die Wand der Nut (3) durch ein Metallrohr (8) mit einer Bohrung oder Lochung (13) versehen wird.

3. Verfahren nach Anspruch 1 oder 2, dadurch gekennzeichnet, daß das Wandmaterial der mit einer Lochung zu versehenden Nut (3) in einem erweichten Zustand gehalten wird.

4. Verfahren nach einem der Ansprüche 1 bis 3, dadurch gekennzeichnet, daß die Außenseite der Muffe (2) mit einem einen Hohlraum aufweisenden Formteil (16) versehen wird, woraufhin eine Nut (18) mittels eines inneren Druckmediums geformt und anschließend im Inneren der Muffe ein geschlossener Raum (12) gebildet wird, der die Nut (3) umschließt und mit der fließfähigen elastomeren Kunststoffzusammensetzung gefüllt wird.

5. Verfahren nach einem der Ansprüche 1 bis 4, dadurch gekennzeichnet, daß ein geschlossener Innenteil (6) des Kerns durch eine geschlossene Verbindungswand (7) mit dem Außenteil (4) des Kerns in dem Zeitpunkt verbunden bleibt, in dem der Innenteil (6) des Kerns radial zur Achse der Muffe (2) zurückgezogen wird.

6. Muffenrohr aus Kunststoff, insbesondere thermoplastischem Material, mit einer Muffe (2) mit einer Ringnut (3), wobei ein mit einer Manschette aus elastischem Material (10) einstückiger Kopfteil (9) eines ringförmigen Dichtungselements in der Nut (3) aufgenommen ist und das aus einem Kunststoffelastomer bestehende Dichtungselement (10) in bezug auf die Innenwand der Nut (3) festgelegt ist, dadurch gekennzeichnet, daß die Wand der Nut (3) mit zumindest einer Öffnung (13) versehen ist, die sich vom Inneren der Nut (3) nach außen erstreckt.

FIG:1.

FIG:2.

FIG:3.

_FIG: 4a._

_FIG: 4b._